Europäisches Patentamt

European Patent Office

Office européen des brevets

(11) Numéro de publication: **0 430 778 A1**

## (12) DEMANDE DE BREVET EUROPEEN

(21) Numéro de dépôt: 90403314.9

(22) Date de dépôt: 23.11.90

(51) Int. Cl.⁵: **B60K 23/08, B60K 17/34**

(30) Priorité: **23.11.89 FR 8915433**

(43) Date de publication de la demande:
**05.06.91 Bulletin 91/23**

(84) Etats contractants désignés:
**DE GB Bulletin 1**

(71) Demandeur: **REGIE NATIONALE DES USINES RENAULT S.A.**
**34, Quai du Point du Jour**
**F-92109 Boulogne Billancourt(FR)**

(72) Inventeur: **Delpierre, Gaetan**
**30, Avenue Claude Nicolas Ledoux**
**F-78114 Cressely/Magny Les Hameaux(FR)**
Inventeur: **Roudeau, Frédéric**

**29, rue de la Plaine**
**F-75020 Paris(FR)**
Inventeur: **Eloy, Xavier**
**1, Hameau de Mont-Martin**
**F-27600 Gaillon(FR)**
Inventeur: **Fillette, Jean-Pierre**
**25, rue des Vignes- Le Goulet-**
**F-27920 Saint-Pierre-de-Bailleul(FR)**
Inventeur: **Tricaud, Christophe**
**164, Domaine de la Chartreuse**
**F-27940 Aubevoye(FR)**

(74) Mandataire: **Ernst-Schonberg, Michel**
**REGIE NATIONALE DES USINES RENAULT**
**SA, Sce 0267, 860, quai de Stalingrad**
**F-92109 Boulogne Billancourt Cédex(FR)**

(54) **Commande active de la répartition du couple moteur entre les essieux avant et arrière d'un véhicule à quatre roues motrices.**

(57) Le système de commande de véhicule à quatre roues motrices, comprend des moyens de détermination du couple moteur (19) disponible aux trains avant et arrière du véhicule; des moyens de détermination de la consigne de la répartition dynamique (27) du couple appliquée sur les trains avant et arrière du véhicule; des moyens de calcul (28) de la répartition dynamique (29) du couple moteur disponible aux trains avant et arrière; des moyens mécaniques pour faire varier la répartition du couple moteur entre les trains avant et arrière; et des moyens de commande (30) desdits moyens mécaniques. Le système permet de répartir le couple moteur entre les trains avant et arrière en fonction de la répartition dynamique des charges appliquées sur les trains, ce qui améliore le comportement dynamique du véhicule sur route.

# COMMANDE ACTIVE DE LA REPARTITION DU COUPLE MOTEUR ENTRE LES ESSIEUX AVANT ET ARRIERE D'UN VERICULE A QUATRE ROUES MOTRICES.

La présente invention concerne un procédé et un système d'amélioration du comportement dynamique sur route de véhicules à quatre roues motrices.

Les systèmes de transmission équipant des véhicules à quatre roues motrices comprennent un train avant et un train arrière. Chacun des trains avant et arrière comporte un essieu rotatif sur chaque extrémité duquel est montée une roue motrice du véhicule.

Un des problèmes importants à résoudre pour ce type de véhicules est comment répartir correctement le couple moteur sur les trains avant et arrière du véhicule en mouvement. Parmi les systèmes de transmission à quatre roues motrices connus, le visco-coupleur permet d'assurer un transfert de couple de l'essieu le plus rapide en rotation vers l'essieu le moins rapide en rotation, le transfert du couple étant une fonction de la différence de vitesse de rotation des essieux avant et arrière du véhicule.

Un autre système connu consiste à utiliser des embrayages pilotés dont le fonctionnement est soit basé sur le principe de tout ou rien, soit déterminé par divers critères prenant en compte le différentiel de vitesse de rotation entre les essieux avant et arrière.

De tels systèmes de transmission sont principalement asservis par la différence de vitesse de rotation des essieux avant et arrière du véhicule et ne prennent pas en compte la répartition instantanée des charges supportées par les trains avant et arrière du véhicule en mouvement. Or, le comportement du véhicule peut être fortement influencé par la quantité et la répartition des charges appliquées aux trains.

La présente invention a pour objet un nouveau système de commande pour véhicules à quatre roues motrices prenant en compte à la fois le couple moteur disponible aux trains avant et arrière et la répartition dynamique des charges entre les trains avant et arrière.

Un autre objet l'invention est de proposer un procédé et un système de commande efficaces permettant d'améliorer le comportement dynamique des véhicules à quatre roues motrices.

Selon l'invention, le système de commande de véhicules à quatre roues motrices comprend des moyens de détermination du couple moteur disponible aux trains avant et arrière du véhicule; des moyens de détermination de la consigne de répartition dynamique du couple à appliquer aux trains avant et arrière du véhicule; des moyens pour déterminer la répartition dynamique du couple à appliquer aux trains avant et arrière; des moyens mécaniques pour faire varier la répartition du couple entre les trains avant et arrière; et des moyens de commande desdits moyens mécaniques.

Les moyens de détermination du couple moteur disponible aux trains avant et arrière comprennent des moyens de détection de la vitesse de rotation du moteur, de la vitesse de rotation de l'essieu avant, et de la pression dans le collecteur d'admission du moteur. Les signaux détectés sont traités de façon à obtenir d'abord le couple mécanique fourni par le moteur et à déterminer ensuite la valeur du couple moteur effectivement disponible aux trains avant et arrière du véhicule.

Les moyens de détermination de la consigne de répartition dynamique du couple à appliquer entre les trains avant et arrière comprennent également des moyens de détection des charges dynamiques agissant verticalement sur chacun des deux trains, de la vitesse du véhicule et de l'angle de direction du volant, un traitement approprié des signaux de détection permettant de donner la consigne de répartition dynamique du couple à appliquer sur chacun des trains avant et arrière du véhicule.

Les moyens mécaniques peuvent être constitués par tout système de transmission connu permettant d'assurer mécaniquement le transfert ou la répartition du couple moteur entre les trains qu'il y ait ou non un différentiel. On choisit avantageusement des embrayages multidisques associés à un différentiel central avec prépondérance sur le train avant et permettant d'assurer la répartition de couple entre des trains avant et arrière autour de la répartition de base du différentiel.

Selon l'invention, le train qui reçoit du moteur le plus de couple doit avoir une vitesse de rotation de l'essieu plus grande que celle de l'essieu de l'autre train.

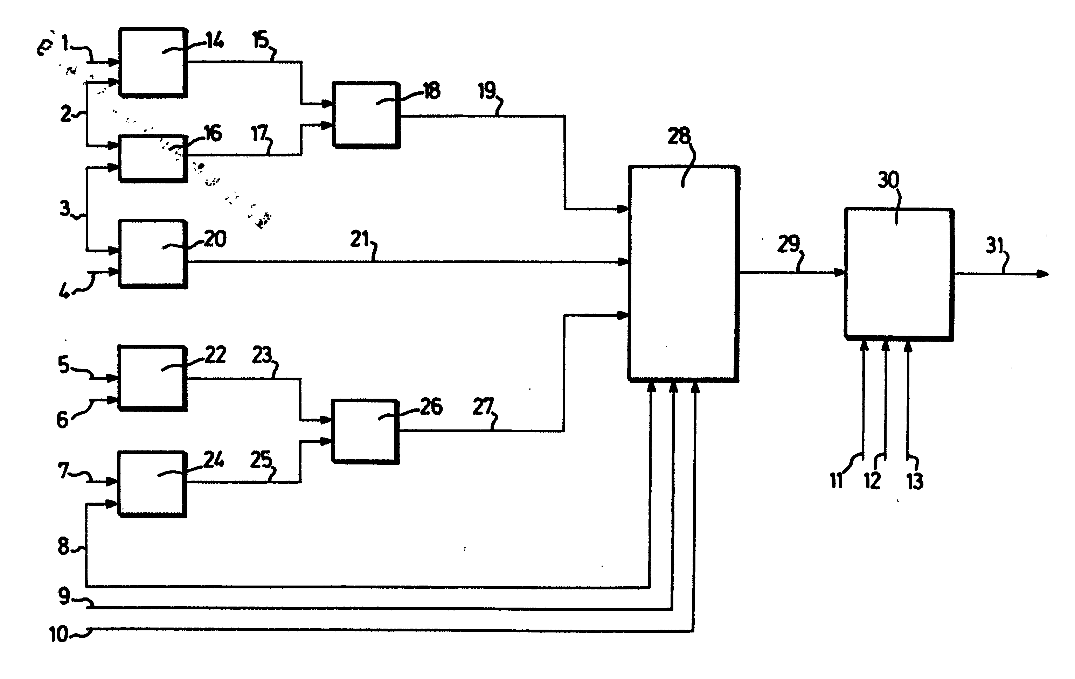

L'invention sera mieux comprise à l'étude de la description détaillée d'un mode de réalisation de l'invention pris à titre d'exemple nullement limitatif et illustré par le dessin unique annexé qui représente un schéma de fonctionnement du système de l'invention.

Tel qu'il est illustré sur la figure unique, le système de l'invention comprend un certain nombre de moyens de détection permettant de donner notamment :

- la pression 1 dans le collecteur d'admission du moteur;
- la vitesse de rotation 2 du moteur;
- la vitesse de rotation 3 de l'essieu avant du véhicule;

- la vitesse de rotation 4 de l'essieu arrière du véhicule;
- la charge dynamique 5 appliquée sur l'essieu avant;
- la charge dynamique 6 appliquée sur l'essieu arrière;
- la vitesse 7 du véhicule;
- l'angle de direction 8 du volant de véhicule;
- l'angle d'ouverture 9 du papillon de gaz d'admission;
- l'indicateur 10 de freinage;
- la pression de commande 11 des embrayages pilotés;
- la température 12 d'huile de la commande des embrayages
- le couple 13 mesuré après un organe de transfert de couple.

Les signaux correspondant à la pression 1 dans le collecteur d'admission et à la vitesse de 2 de rotation du moteur sont alimentés à un premier organe de calcul 14 qui fournit une valeur du couple 15 généré par le moteur. Un second organe de calcul 16 alimenté par les signaux de vitesse de rotation 2 du moteur et de vitesse de rotation 3 de l'essieu avant du véhicule fournit un facteur 17 de démultiplication entre la vitesse de rotation 2 du moteur et la vitesse de rotation 3 de l'essieu avant. Un troisième organe de calcul 18 permet de calculer, à partir du couple 15 généré par le moteur et du facteur 17 de démultiplication, la valeur du couple moteur 19 effectivement disponible aux trains avant et arrière du véhicule.

Les signaux correspondant aux vitesses 3 et 4 de rotation des essieux avant et arrière passent par un quatrième organe de calcul 20 pour donner un signal 21 proportionnel à la différence de vitesse de rotation des essieux avant et arrière.

Les signaux 5 et 6 correspondant respectivement aux charges dynamiques verticales sur les trains avant et arrière sont traités par un cinquième organe de calcul 22 qui fournit un signal 23 représentatif de la répartition dynamique des charges entre l'avant et l'arrière. Un sixième organe de calcul 24, alimenté par les signaux 7 et 8 correspondant respectivement à la vitesse du véhicule et à l'angle de direction du volant, permet de déterminer un facteur dynamique 25 de correction de répartition. Un septième organe de calcul 26 permet, à partir du signal de répartition dynamique de charges de base 23 et du signal du facteur dynamique de correction de répartition 25, de fournir un signal 27 représentatif de la consigne ou de la répartition dynamique du couple entre les deux trains.

Le facteur dynamique de correction de répartition 25 traduit la correction à apporter à la répartition de base 23 de façon à caractériser le comportement dynamique sur route du véhicule en fonction du souhait du constructeur.

Un mcyen de calcul 28 permet de déterminer la répartition dynamique 29 du couple moteur disponible aux trains avant et arrière, ce qui traduit dans cet exemple par la détermination du couple à transférer sur le train arrière par un organe de commande, à partir du signal 19 du couple moteur disponible et du signal 27 de la répartition dynamique du couple entre les trains avant et arrière. Le moyen de calcul 28 peut également tenir compte d'autres paramètres, tels que le signal 21 représentant la différence de vitesse de rotation des essieux avant et arrière, le signal 8 de l'angle de direction du volant, le signal 9 de l'angle d'ouverture du papillon des gaz d'admission du moteur et le signal 10 de l'indicateur de freinage, afin de déterminer le couple à transférer 29 sur le train arrière de façon plus satisfaisante vis-à-vis du comportement dynamique du véhicule sur route.

Le signal 29 de couple à transférer au train arrière du véhicule est envoyé à un moyen de commande 30 qui donne un signal de commande 31 à des moyens mécaniques pour faire varier la répartition du couple moteur disponible entre les trains avant et arrière du véhicule. Le moyen de commande 30 peut prendre en compte d'autres paramètres de correction, qui sont par exemple la pression 11 de commande des embrayages pilotés, la température 12 d'huile de commande et le couple 13 mesuré après l'organe de transfert pour permettre aux moyens mécaniques d'exécuter une instruction de commande aussi fidèle que possible de la répartition dynamique 29 du couple moteur disponible aux trains avant et arrière, ce qui permet d'assurer un comportement dynamique optimum du véhicule en mouvement.

D'une manière générale, l'invention propose un procédé de commande original qui consiste, fondamentalement, à déterminer la répartition dynamique 29 du couple moteur disponible aux trains avant et arrière du véhicule, se traduisant par le couple à transférer au train arrière, à partir d'une part d'un calcul du couple moteur effectivement disponible aux trains avant et arrière, et d'autre part d'une reconnaissance de la répartition dynamique 27 du couple entre les trains avant et arrière, et cela de manière permanente pour améliorer le comportement dynamique du véhicule à quatre roues motrices en mouvement.

## Revendications

1. Procédé de commande d'un véhicule à quatre roues motrices pour améliorer son comportement dynamique sur route, caractérisé par le fait qu'il consiste
- à détecter des paramètres propres au véhicule en mouvement;

- à déterminer à partir desdits paramètres le couple moteur (19) disponible aux trains avant et arrière du véhicule d'une part, et la consigne de répartition dynamique (27) du couple à appliquer sur les trains avant et arrière du véhicule d'autre part;

- à calculer la répartition dynamique (29) du couple moteur disponible aux trains avant et arrière à partir du couple moteur disponible (19) et de la consigne de répartition dynamique (27) souhaitée;

- et à commander des moyens mécaniques pour répartir le couple moteur disponible (19) aux trains avant et arrière selon la répartition dynamique (29) du couple précédemment déterminée.

2. Procédé de commande selon la revendication 1, caractérisé par le fait que pour déterminer le couple moteur (19) disponible aux trains avant et arrière, les paramètres du véhicule détectés et utilisés sont la pression (1) dans le collecteur d'admission du moteur, la vitesse de rotation (2) du moteur et la vitesse de rotation (3) de l'essieu du train avant du véhicule, et que pour déterminer la consigne de répartition dynamique (27) souhaitée, les paramètres du véhicule détectés et utilisés sont les charges dynamiques verticales (5, 6) appliquées sur chacun des trains avant et arrière, la vitesse (7) du véhicule et l'angle (8) de direction du volant du véhicule.

3. Procédé de commande selon la revendication 1 ou 2, caractérisé par le fait que les paramètres du véhicule détectés comprennent les vitesses de rotation (3, 4) des essieux des trains avant et arrière du véhicule, l'angle (8) de direction du volant, l'angle d'ouverture (9) du papillon d'admission de gaz et l'indicateur (10) de freinage qui sont également tenus compte dans la détermination de la répartition dynamique (29) du couple moteur disponible aux trains avant et arrière du véhicule.

4. Procédé de commande selon l'une des revendications précédentes, caractérisé par le fait que la détermination du signal de commande (31) n'est pas uniquement fonction de la répartition dynamique (29) du couple moteur disponible, mais également fonction des paramètres de transmission (11, 12, 13) des moyens mécaniques.

5. Système de commande de véhicule à quatre roues motrices, caractérisé par le fait qu'il comprend des moyens de détermination du couple moteur (19) disponible aux trains avant et arrière du véhicule; des moyens de détermination de la consigne de répartition dynamique (27) du couple souhaitée sur les trains avant et arrière du véhicule; des moyens de calcul (28) de la répartition dynamique (29) du couple moteur disponible aux trains avant et arrière; des moyens mécaniques pour faire varier la répartition du couple moteur entre les trains avant et arrière; et des moyens de commande (30) desdits moyens mécaniques.

6. Système de commande selon la revendication 5, caractérisé par le fait que les moyens de détermination du couple moteur (19) disponible, comprennent des moyens de détection de la pression (1) dans le collecteur d'admission du moteur, de la vitesse de rotation (2) du moteur, de la vitesse de rotation (3) de l'essieu du train avant du véhicule, et des organes de calcul (14, 16, 18) permettant de déterminer le couple moteur (19) disponible.

7. Système de commande selon la revendication 5 ou 6, caractérisé par le fait que les moyens de détermination de la consigne de répartition dynamique (27) du couple comprennent des moyens de détection des charges dynamiques verticales (5, 6) sur les trains avant et arrière, de la vitesse (7) du véhicule, de l'angle (8) de direction du volant, et des organes de calcul (22, 24, 26) pour effectuer une correction (25) des charges dynamiques (23) sur les trains avant et arrière du véhicule.

8. Système de commande selon une des revendications 5 à 7, caractérisé par le fait qu'il comprend des moyens de détection de la vitesse de rotation (4) de l'essieu du train arrière, de l'angle d'ouverture (9) du papillon d'admission de gaz, de l'indicateur (10) de freinage pour fournir des données pouvant être pris en compte par les moyens de calcul (28) dans sa détermination de la répartition dynamique (29) du couple moteur disponible aux trains avant et arrière.

9. Système de commande selon l'une des revendications 5 à 8, caractérisé par le fait qu'il comprend en outre des moyens de détection des paramètres de transmission mécaniques (11, 12, 13) reliés aux moyens de commande (30) afin d'envoyer un signal de commande (31) aux moyens mécaniques pour répartir correctement le couple moteur disponible (19) entre les trains avant et arrière selon la répartition dynamique (29) calculée.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-3720459 (FUJI JUKOGYO)<br>* colonne 3, lignes 31 - 53; figure 2 *<br>* colonne 4, ligne 26 - colonne 5, ligne 67; figures 3, 4 * | 1, 4-7, 9 | B60K23/08<br>B60K17/34 |
| Y | * colonne 6, lignes 4 - 31; figures 5, 6 *<br>--- | 2, 3, 8 | |
| Y | FR-A-2571668 (PORSCHE)<br>* page 9, ligne 33 - page 10, ligne 32; figure 3 *<br>* page 12, ligne 31 - page 13, ligne 26; figure 4 *<br>* page 14, lignes 5 - 29; figure 5 * | 2, 3, 8 | |
| X | --- | 5, 6 | |
| A | DE-A-3636260 (OPEL)<br>* colonne 4, lignes 34 - 65; figure 1 *<br>------ | 1-4 | |
| | | | **DOMAINES TECHNIQUES RECHERCHES (Int. Cl.5 )**<br><br>B60K |

Le présent rapport a été établi pour toutes les revendications

| Lieu de la recherche | Date d'achèvement de la recherche | Examinateur |
|---|---|---|
| BERLIN ’ | 28 JANVIER 1991 | BROYDE, M |